# EUROPÄISCHE PATENTANMELDUNG

(11) **EP 1 035 375 A1**
(43) Veröffentlichungstag der Anmeldung: **13.09.2000**
(21) Anmeldenummer: 99110607.1
(22) Anmeldetag: 02.06.1999
(51) Int. Cl.: F23J 13/02, E04F 17/02, F16L 59/14, F16L 59/18

(54) **Schornsteindämmschale aus Mineralwolle und Verfahren zu deren Herstellung**

(30) Priorität: 05.03.1999 DE 19909787
(71) Anmelder: Seitz, Wilfried, 65232 Taunusstein-Bleidenstadt (DE)
(72) Erfinder: Seitz, Wilfried, 65232 Taunusstein-Bleidenstadt (DE)
(74) Vertreter: Fuchs Mehler Weiss & Fritzsche

(57) **Zusammenfassung**

Beschrieben ist eine Dämmschale (1) aus Mineralwolle als Isolierung für handelsübliche bzw. genormte Abgasrohre (6), insbesondere solche aus Keramik, die mit einer erweiterten Glockenmuffe (7) für das Zusammenfügen mehrerer solcher Rohre versehen sind. Die Dämmschale weist bei ansonsten ungeänderter Außenkontur zumindest an einem ihrer Enden einen erweiterten Innenbereich (5) auf, dessen Innendurchmesser zumindest dem Außendurchmesser der Muffe eines zu isolierenden Abgasrohres entspricht. Die Dämmschale kann so mit ihrem Ende über eine solche Muffenverbindung geschoben werden, wobei sie im restlichen Bereich im wesentlichen an dem Abgasrohr anliegt. Nach einem bevorzugten Herstellungsverfahren sind die Wandbereiche der Endschale (5) mit erweitertem Innendurchmesser zu deren Stabilisierung mit einer erhöhten Materialdichte hergestellt.

## Beschreibung

Die Erfindung betrifft eine rohrförmige Dämmschale aus Mineralwolle für Abgasrohre nach dem Oberbegriff des Patentanspruches 6. Die Erfindung betrifft ferner ein Verfahren für die Herstellung einer solchen Dämmschale nach dem Oberbegriff des Patentanspruches 1.

Es ist bekannt und unter bestimmten Voraussetzungen auch vorgeschrieben, Abgasrohre, die aus Edelstahl, Glas, Keramik oder auch aus Kunststoff bestehen können, innerhalb des Schornsteinschachtes mit einer Wärmedämmung aus Mineralwolle zu umgeben.

Hierfür werden in der Regel rohrartige Dämmschalen aus Mineralwolle verwendet, die auf das eigentliche Abgasrohr entweder aufgeschoben werden oder als Halbschalen von der Seite her um das Rohr gelegt werden. Die Mineralwolle solcher Dämmschalen oder Dämmrohre ist in der Regel durch ein thermisch aushärtbares Kunstharz formstabilisiert, so daß diese Dämmschalen gestaltfest sind und sich auch mechanisch bearbeiten lassen.

Die Herstellungsweise solcher Schornsteindämmschalen ist bekannt. Auf einen zylindermantelförmigen Kern aus durchbrochenem Material, dessen Außendurchmesser dem Innendurchmesser der herzustellenden Dämmschale entspricht, werden Lagen einer mit einem aushärtbaren Kunstharz imprägnierten Mineralwolle, in der Regel Basaltwolle oder eine basalthaltige Mineralwolle, gewickelt. Dieser Wickelkörper wird dann durch Walzeneinwirkung in gewissem Maß verdichtet und außen vorgeglättet, worauf dann die Aushärtung des Kunstharzes und somit die Formstabilisierung in einem Ofen erfolgt. Der Kern ist, wie erwähnt, durchbrochen, damit Warmluft auch vom Inneren des Wickelkörpers her an die Mineralwolle gelangen kann. Der ausgehärtete Wickelkörper wird dann entformt, indem der Kern gezogen wird, und es finden dann übliche mechanische Nachbearbeitungen der Außenoberfläche und der Stirnseiten statt, bei denen die Schale auch auf Solllänge geschnitten wird. Es ist auch eine Herstellungsweise möglich, bei der der Kern mit Mineralwolle belegt und dann in eine durchbrochene, zylindermantelförmige Außenform eingelegt wird. Beim Schließen dieser Form findet dann eine gewisse Verdichtung der Welle und eine fast endgültige Formgebung der Außenkontur statt.

Insoweit Abgasrohre aus Edelstahl verwendet werden, was in sehr großem Umfang geschieht, können diese Edelstahlrohre ohne große Durchmesseränderungen zusammengeschoben werden. Die Dämmschalen aus Mineralwolle, die zweckmäßigerweise mit einem etwas größeren Innendurchmesser gefertigt sind als der Außendurchmesser dieser Edelstahlröhre, lassen sich dann einfach auf die Edelstahlröhre aufschieben.

Größere Probleme macht die Isolierung beispielsweise bei Keramikrohren, die an einem ihrer Enden mit einer Glockenmuffe zum Einschieben des muffenfreien Endes eines anderen Rohres versehen sind, um so eine Folge von Rohren zusammenfügen zu können. Keramikmaterial bedarf zum Ausbilden einer solchen Muffe einer gewissen Mindestdicke, die zu einer nicht unbeachtlichen Vergrößerung des Außendurchmessers einer solchen Rohrzusammenfügung im Muffenbereich führt. Strikt zylindermantelförmig ausgebildete Dämmschalen lassen sich nur dann auf solche Rohrverbindungen aufschieben, wenn ihr Innendurchmesser zumindest dem Außendurchmesser der Glockenmuffe des zu isolierenden Keramik-Abgasrohres entspricht. Dies führt dazu, daß Dämmschalen, die zumindest mit einem Ende nicht auf einer solchen Muffe sitzen, was die Regel ist, einen lockeren Sitz haben, durch den Spalte an den Stoßstellen entstehen können. Wünschenswert ist es, daß auch eine Mineralwoll-Dämmschale über weite Bereiche ihrer Längserstreckung an einem Keramik-Abgasrohr in etwa anliegt. Dies könnte natürlich dadurch erreicht werden, daß die Muffenbereiche des Abgasrohres bei der Isolierung des Rohres mit Dämmschalen erst einmal ausgespart und dann gesondert entweder durch spezielle Bauteile oder durch Umwickeln von Hand isoliert werden. Eine solche Lösung ist unbefriedigend.

Der Erfindung liegt daher die Aufgabe zugrunde, eine Dämmschale aus Mineralwolle, insbesondere für das Isolieren von Keramik-Abgasrohren mit Glockenmuffen bereitzustellen, die eine sitzgenaue, durchgehend außenzylindrische Isolierung ermöglicht, die ohne Sonderbauteile einfach anzubringen ist.

Diese Aufgabe wird für eine Dämmschale nach dem Oberbegriff des Patentanspruches 6 durch die kennzeichnenden Merkmale dieses Anspruches gelöst.

Zur Verfügung gestellt wird durch die Erfindung eine Dämmschale aus Mineralwolle für Abgasrohre mit Glockenmuffe oder ähnlichen Durchmessererweiterungen, in deren Innenseite, einfach ausgedrückt, zumindest an einem Ende eine entsprechende Erweiterung eingearbeitet ist. Diese Erweiterung soll einen Innendurchmesser aufweisen, der mindestens dem Außendurchmesser der Glockenmuffe eines handelsüblichen oder genormten Abgasrohres entspricht, welches mit der Dämmschale isoliert werden soll. Auch wenn die Dämmschale so gefertigt ist, daß sie auf den restlichen Bereichen des zu isolierenden Rohres einen verhältnismäßig festen Sitz hat, was bei der gewissen Nachgiebigkeit auch der ausgehärteten Mineralwolle ohne Schwierigkeiten erreichbar ist, ist der Innendurchmesser des erweiterten Bereiches zweckmäßigerweise etwas größer gehalten als der Außendurchmesser einer zu isolierenden Muffe, um Fertigungstoleranzen bei den Abgasrohren zu berücksichtigen und eventuelle Schwierigkeiten beim Aufschieben der Rohre nicht gerade im Muffenbereich entstehen zu lassen.

Eine gängige Ausführungsform der erfindungsgemäßen Dämmschale hat eine innere Erweiterung nur an einem Ende, und ihre Länge ist so bemessen, daß sie auch der Einzellänge der zu isolierenden Abgasrohre entspricht. In diesem Fall muß der Bereich mit erweitertem Innendurchmesser der Dämmschale eine Länge aufweisen, die zumindest der Länge der Glockenmuffe des zu isolierenden Rohres entspricht. Auch hier kann es aber zweckmäßig sein, die Länge des erweiterten Bereiches in der Dämmschale größer auszubilden als die Länge der Glockenmuffe, um Längentoleranzen in der Fertigung der Abgasrohre wie auch der Dämmschalen Rechnung zu tragen. Eine Verlängerung von mindestens 5 % gegenüber der Länge der Glockenmuffe des Abgasrohres kann hier sinnvoll sein. Aber auch etwas größere Längen sind nicht nachteilig, da die Dämmschale hinter dem Ende ihres erweiterten Bereiches auf größerer Länge von dem Abgasrohr normal getragen wird.

Denkbar ist es aber auch, erfindungsgemäße Dämmschalen zur Verfügung zu stellen, deren Länge der Länge eines zu isolierenden Rohres entspricht, die aber an jedem ihrer Enden einen Bereich mit erweitertem Innendurchmesser aufweisen, der zuminest der halben Länge der Glockenmuffe eines Abgasrohres entspricht. Solche Dämmschalen können dann von beiden Seiten auf die Muffenverbindung aufgeschoben werden, wobei sich die Fuge in etwa in der Mitte der Verbindung befindet. Montagemäßig ist diese Ausführungsform aber nicht so günstig wie diejenige einer Dämmschale mit einer Erweiterung von voller Muffenlänge nur an einem Ende.

Die erfindungsgemäße Dämmschale ist aber nicht darauf festgelegt, daß ihre Länge in jedem Fall der Länge der zu isolierenden Rohre entspricht. Gerade, um Längentoleranzen sowohl bei den Abgasrohren als auch bei den Dämmschalen ausgleichen zu können, kann es zweckmäßig sein, erfindungsgemäße Dämmschalen mit einer Länge zu fertigen, die von derjenigen der zu isolierenden Rohre abweicht. So können beispielsweise Dämmschalen zur Verfügung gestellt werden, die an einem ihrer Enden eine Innenerweiterung von mindestens der vollen Länge einer Muffenverbindung aufweisen, deren Gesamtlänge aber kürzer ist als die Einzellänge eines zu isolierenden Abgasrohres. Die endseitige Innenerweiterung in der Dämmschale stört nicht ihr Anbringen in Bereichen des Abgasrohres, die gar keine Muffe aufweisen. Da die erfindungsgemäße Schale in ihrem nicht erweiterten Bereich genügend Auflagefläche auf dem Abgasrohr hat, ist es unschädlich, wenn das erweiterte Ende der Dämmschale nicht über eine Muffenverbindung zu liegen kommt. Vielmehr kann bei unregelmäßigem Verlegen der Dämmschalen eine Schale im Bereich der nächsten Muffe so gekürzt werden, daß die Restschale mit ihrer endseitigen Erweiterung passend zur Muffe positioniert werden kann. Dies eröffnet auch die Möglichkeit, eine Dämmschale wahlweise von der einen oder auch der anderen Seite auf eine Muffenverbindung zu schieben.

Insgesamt führt eine Isolierung mit den erfindungsgemäßen Dämmschalen zu einer durchgehend zylindrischen Außenoberfläche, von der her nicht mehr erkennbar ist, wo sich Muffenverbindungen im Abgasrohr befinden. Schießlich kann die erfindungsgemäße Dämmschale durchaus auch auf Kaminrohren verwendet werden, die an ihren Verbindungsstellen oder anderweitig keine Durchmessererweiterungen aufweisen. Dies trifft insbesondere für Dämmschalen zu, die nach den im folgenden noch zu beschreibenden Herstellungsverfahren gefertigt sind. Dies reduziert erheblich die Lagerhaltung, wenn die Dämmschalen für Abgasrohre zwar bestimmten Außendurchmessers aber unterschiedlichen Materials gleichermaßen eingesetzt werden können. Erforderlichenfalls können die endseitigen Hohlräume in der Dämmschale bei einem glatten Abgasrohr mit loser Mineralwolle gefüllt werden.

Grundsätzlich können die Endbereiche erweiterten Innendurchmessers in eine standardmäßige, zylindermantelförmige Dämmschale nachträglich eingearbeitet werden, beispielsweise durch spanabhebende Bearbeitung. Die Erfindung sieht jedoch eine besondere Herstellungsvariante vor, bei der die erweiterten Innenbereiche schon vor dem Aushärten der Schale im normalen Herstellungsablauf vorgesehen werden. Dies geschieht dadurch, daß bei der Formgebung zum Ausbilden des zylindrischen Innenraumes der Schale kein Kern mit einer Zylinderoberfläche gleichen Durchmessers sondern ein Kern verwendet wird, der erhabene Bereiche aufweist, die den in der Schale zu erzeugenden innen erweiterten Bereichen entsprechen. Insoweit es sich nicht nur um die Herstellung von Schalen mit einem erweiterten Innenbereich nur an einem Ende handelt, muß der Kern geteilt ausgeführt werden, damit er später auch entformbar ist.

Ein besonderes Merkmal des erfindungsgemäßen Verfahrens liegt jedoch darin, daß bei der Herstellung der Kern auch in denjenigen Bereichen, die die beschriebenen Erweiterungen aufweisen, pro Längeneinheit in etwa mit der gleichen Menge Mineralwolle belegt wird wie in den übrigen Bereichen, wodurch sich hier, wenn der Wickelkörper durch eine Walze verdichtet oder durch Umschließen mittels einer Form verdichtet und auf eine zylindrische Außenoberfläche gebracht wird, eine höhere Mineralwolldichte entsteht als in den regulären Bereichen der Schale. Dies führt zu einer höheren Widerstandsfähigkeit der Schale in diesen Bereichen. Liegen die Schalenbereiche mit Innenerweiterung später auf einer Muffenverbindung auf, ist dies nicht so entscheidend. Wird die gleiche Schale aber auch in einer Weise verwendet, daß die erfindungsgemäßen Bereiche mit Innenerweiterungen auch in Positionen des Abgasrohres gelangen, die keine Erweiterung des Außendurchmessers aufweisen, entsteht ein Hohlraum mit einem Schalenende, welches als solches nicht mehr unterstützt ist. Hier trägt die erfindungsgemäße Materialverdichtung in den Bereichen erweiterten Innendurchmessers zu einer erhöhten Stabilität der Schale bei.

Die erfindungsgemäße Dämmschale kann in Längsrichtung geschlitzt sein, um sie für das Anbringen um ein Abgasrohr herum aufklappen zu können. Zu diesem Zweck erstreckt sich der Schlitz auf bekannte Weise an einer Stelle durch den gesamten Schalenmantel und noch in die dem Schlitz diametral gegenüberliegende Wand hinein, um diese für das Aufklappen zu schwächen. Das Anbringen einer aufklappbaren Schale ist unabhängig vom Montagezustand des Abgasrohres. Die Schale braucht nicht auf das Rohr geschoben zu werden. Dennoch besteht der Hauptbedarfsfall in nicht geschlitzten Dämmschalen.

Aber auch unabhängig von dem beschriebenen Herstellungsverfahren ist die erfindungsgemäße Dämmschale mit ihren unterschiedlichen Anwendungsmöglichkeiten neu und fortschrittlich, egal, ob die Bereiche erweiterten Innendurchmessers unmittelbar bei der Herstellung oder erst später eingearbeitet worden sind.

Da es bei der vorliegenden Erfindung ausschließlich nur auf die Gestaltung des Innenraumes der Dämmschale ankommt, ist die Erfindung nicht auf Dämmschalen mit rein zylindrischer Außenoberfläche beschränkt, wenn solche Schalen auch den Großteil des Bedarfs darstellen dürften. In Sonderfällen kann die Außengestalt der Schale aber unabhängig von ihrer Gestaltung im Innenraum an spezielle Einbaubedingungen angepaßt sein.

Eine gängige Dämmschale der hier betroffenen Art hat beispielsweise bei einem Innendurchmesser in den nicht erweiterten Bereichen von 160 mm eine Länge von einem Meter. Die Wanddicke beträgt im nicht erweiterten Bereich etwa 30 mm, im erweiterten Bereich nur etwa die Hälfte davon.

Das Material kann, wie bereits erwähnt, eine Glaswolle sein. Bevorzugt wird aber eine Wolle mit Steinanteil, beispielsweise eine basalthaltige Stein- oder Glaswolle. Im Hinblick auf ihre Verarbeitbarkeit soll sie der gültigen Schadstoffverordnung entsprechen. Ihr Gehalt an Kunstharzbinder ist insbesondere für den hier betroffenen Anwendungsfall in einer Weise begrenzt, daß eine geforderte Brandklasse des Materials eingehalten wird. Diese Zusammenhänge sind jedoch allgemein geläufig.

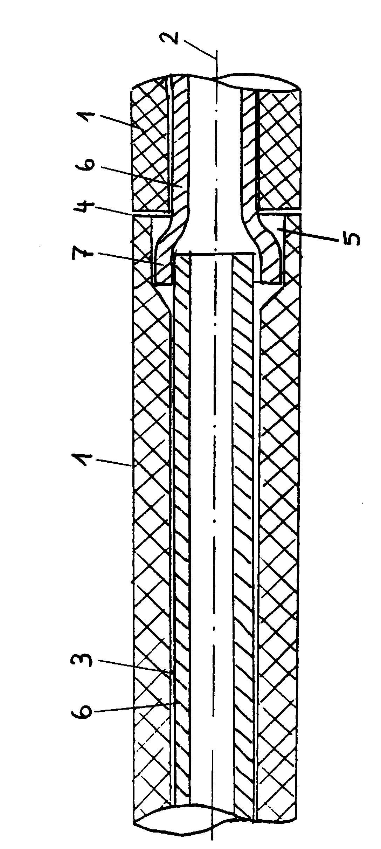

An einem Ausführungsbeispiel wird die Erfindung näher erläutert. Die einzige Zeichnungsfigur zeigt einen Längsschnitt durch eine erfindungsgemäße rohrförmige Dämmschale.

Die rohrförmige Dämmschale 1 aus Mineralwolle weist entlang ihrer Längsachse 2 eine Bohrung 3 bestimmten Durchmessers auf. An einem Ende 4 der rohrförmigen Dämmschale 1 umfaßt diese einen erweiterten Innenbereich 5, dessen Innendurchmesser größer ist als der Innendurchmesser der Bohrung 3. An diesem stirnseitigen Ende 4 der rohrförmigen Dämmschale 1 schließt sich eine weiter rohrförmig Dämmschale gleicher Art an. In diese ist ein Abgasrohr 6 aus Keramik aufgenommen. Das Abgasrohr 6 besitzt eine nach außen erweiterte Glockenmuffe 7, die endseitig aus der rechten rohrförmigen Dämmschale 1 herausragt und sich in den erweiterten Innenbereich 5 der linken rohrförmigen Dämmschale 1 erstreckt. Der Außendurchmesser der Glockenmuffe 7 des Abgasrohres 6 entspricht im wesentlichen dem Innendurchmesser des erweiterten Innenbereiches 5 der linken rohrförmigen Dämmschale 1. Der Innendurchmesser der Glockenmuffe 7 des Abgasrohres 6 entspricht hingegen im wesentlichen dem Durchmesser der Bohrung 3 der rohrförmigen Dämmschale 1.

In die rohrförmige Dämmschale 1 ist ein weiteres Abgasrohr 6 eingesetzt, wobei das eine Ende des Abgasrohres 6 in der Glockenmuffe 7 des rechten Abgasrohres 6 mündet und von der Glockenmuffe 7 umfaßt wird. Auf diese Weise können mehrere rohrförmige Dämmschalen 1 mit darin aufgenommenen Abgasrohren aneinandergereiht werden.

## Patentansprüche

1. Verfahren zum Herstellen einer rohrförmigen Dämmschale aus Mineralwolle für die Isolierung von Abgasrohren, insbesondere solchen aus Keramik, die für das Zusammenfügen mehrerer solcher Rohre an einem ihrer Enden mit einer Glockenmuffe mit vergrößertem Innen- und Außendurchmesser versehen sind,
bei dem Lagen einer mit einem thermisch aushärtbaren Kunstharzbinder vorimprägnierten Mineralwolle auf einen Kern mit kreisförmigem Querschnitt aufgebracht, der so entstandene Rohkörper von außen durch Walzen oder eine Außenform verdichtet und in seiner Außengestalt egalisiert, auf dem Kern thermisch ausgehärtet, vom Kern befreit und zur Fertigstellung der Dämmschale an seiner Außenmantelfläche auf Fertigdurchmesser und an seinen Stirnseiten auf Fertiglänge mechanisch nachbearbeitet bzw. gekürzt und gegebenenfalls zum Aufklappen axial geschlitzt wird,
dadurch gekennzeichnet,
daß ein Kern verwendet wird, der an mindestens einem seiner Enden einen Bereich mit erweitertem Durchmesser aufweist, dessen Außendurchmesser mindestens dem Außendurchmesser der Glockenmuffe eines handelsüblichen oder genormten Abgasrohres entspricht, zum Erzeugen mindestens eines Bereiches erweiterten Innendurchmessers an mindestens einem Ende der Dämmschale, und daß der Kern im Bereich seines erweiterten Durchmessers mit in etwa der gleichen Menge von Mineralwolle je Längeneinheit belegt wird wie in den übrigen Bereichen und die Verdichtung des Rohkörpers vor dem Aushärten auf einen in etwa durchgehend gleichen Außendurchmesser erfolgt.

2. Verfahren nach Anspruch 1, dadurch gekennzeichnet, daß zum Herstellen einer Dämmschale mit Bereichen erweiterten Innendurchmessers an beiden Enden ein aus zwei Teilen in seiner Länge zusammensetzbarer Kern verwendet wird.

3. Verfahren nach Anspruch 1 oder 2, dadurch gekennzeichnet, daß der Übergang im Innendurchmesser der Dämmschale schräg ausgebildet wird.

4. Verfahren nach einem der Ansprüche 1-3, dadurch gekennzeichnet, daß der stirnseitige Bereich erweiterten Innendurchmessers der Dämmschale länger ausgebildet wird als die Länge der aufzunehmenden Glockenmuffe eines handelsüblichen oder genormten Abgasrohres.

5. Verfahren nach einem der Ansprüche 1-3, dadurch gekennzeichnet, daß die Dämmschale in einer Länge hergestellt wird, die von derjenigen handelsüblicher bzw. genormter Abgasrohre abweicht.

6. Rohrförmige Dämmschale aus Mineralwolle für Abgasrohre, insbesondere solche aus Keramik, die an einem ihrer Enden mit einer Glockenmuffe für das Zusammenfügen mit einem weiteren Rohr dieser Art versehen sind, dadurch gekennzeichnet, daß sie an mindestens einem ihrer Enden (4) mit einem erweiterten Innenbereich (5) versehen ist, dessen Innendurchmesser größer ist als der Innendurchmesser der restlichen Schalenlänge, zur Aufnahme zumindest eines Teiles der Glockenmuffe (7) eines handelsüblichen oder genormten Abgasrohres (6).

7. Dämmschale nach Anspruch 6, dadurch gekennzeichnet, daß sie nur an einem Ende (4) mit einem erweiterten Innenbereich (5) versehen ist, dessen Länge mindestens der Länge der Glockenmuffe (7) eines handelsüblichen oder genormten Abgasrohres (6) entspricht.

8. Dämmschale nach Anspruch 6, dadurch gekennzeichnet, daß sie an beiden Enden (4) mit einem erweiterten Innenbereich (5) versehen ist, dessen Länge mindestens der halben Länge der Glockenmuffe (7) eines handelsüblichen oder genormten Abgasrohres (6) entspricht.

9. Dämmschale nach Anspruch 8, dadurch gekennzeichnet, daß sie an beiden Enden (4) mit einem erweiterten Innenbereich (5) versehen ist, dessen Länge mindestens der Länge der Glockenmuffe (7) eines handelsüblichen oder genormten Abgasrohres (6) entspricht.

10. Dämmschale nach Anspruch 7 oder 8, dadurch gekennzeichnet, daß ihre Länge derjenigen des handelsüblichen oder genormten Abgasrohres (6) entspricht.

11. Dämmschale nach Anspruch 7, dadurch gekennzeichnet, daß ihre Länge geringer ist als diejenige des handelsüblichen oder genormten Abgasrohres (6).

12. Dämmschale nach Anspruch 9, dadurch gekennzeichnet, daß ihre Länge größer ist als diejenige des handelsüblichen oder genormten Abgasrohres (6).

13. Dämmschale nach Anspruch 6, 7 oder 9, dadurch gekennzeichnet, daß die Länge der erweiterten Innenbereiche (5) merklich, d.h. mindestens etwa 5 % größer ist als die Länge der Glockenmuffe (7) des handelsüblichen oder genormten Abgasrohres (6).

14. Dämmschale nach mindestens einem der Ansprüche 1-13, dadurch gekennzeichnet, daß die Schale (1) im Bereich des erweiterten Innendurchmessers (5) eine höhere Materialdichte aufweist als in den übrigen Bereichen.

15. Dämmschale nach mindestens einem der Ansprüche 6 bis 14, dadurch gekennzeichnet, daß sie längsgeschlitzt und aufklappbar ist.
